(19) Europäisches Patentamt
European Patent Office
Office européen des brevets

(11) Publication number: 0 017 364
A1

(12) # EUROPEAN PATENT APPLICATION

(21) Application number: 80300786.3

(22) Date of filing: 14.03.80

(51) Int. Cl.[3]: C 08 F 218/12
C 09 J 3/14, C 09 J 7/02
C 09 K 3/10, C 09 D 3/81
D 06 M 15/40, D 06 M 17/00
D 04 H 1/64

(30) Priority: 15.03.79 US 20689
31.05.79 US 43998

(43) Date of publication of application:
15.10.80 Bulletin 80/21

(84) Designated Contracting States:
BE CH DE FR GB IT NL SE

(71) Applicant: Rohm and Haas Company
Independence Mall West
Philadelphia, Pennsylvania 19105(US)

(72) Inventor: Winey, Donald Alfred
358 Rettop Place
Warminster Pennsylvania, 18974(US)

(74) Representative: Angell, David Whilton et al,
Rohm and Haas Company Patent Department
Chesterfield House Barter Street
London WC1A 2TP(GB)

(54) **Radiation-curable allyl benzoylbenzoate copolymers, their use, products thereof, and methods of making these products.**

(57) Radiation-curable copolymers containing from 0.1 to 10% by weight of allyl benzoylbenzoate units are disclosed which crosslink on exposure to actinic radiation such as ultraviolet light. The copolymers are used in various coating or impregnating compositions, such as for non-woven fabric products, paper and textiles products or in the formulation of adhesives, caulks and sealants. Methods of preparing these compositions and products are disclosed in which allyl benzoylbenzoate polymer is cured by exposure to actinic radiation.

EP 0 017 364 A1

0017364

TITLE MODIFIED
see front page



RADIATION-CURABLE ALLYL BENZOYLBENZOATE COPOLYMERS, COMPOSITIONS AND PRODUCTS THEREOF, AND METHODS OF MAKING THEM

This invention is concerned with certain radiation-curable allyl benzoylbenzoate copolymers, their use in the preparation of paper, non-woven and textile products and adhesives, caulks and sealants and in coating and/or impregnating compositions. The invention also embraces methods of preparing such products and compositions.

Polymers of monoethylenically unsaturated vinyl monomers have many uses because of their outstanding physical properties and their adaptability to economical manufacture. However, they have disadvantages which tend to limit their usefulness, such as susceptibility to action of solvents, lack of resistance to gasoline, oil, and grease, excessive flexibility and lack of resilience, and loss of dimensional stability and strength at relatively low temperature.

Various crosslinking techniques have been resorted to in trying to overcome the disadvantages mentioned that are associated with the conventional linear, two-dimensional form. Such techniques have generally not been completely practical because they sometimes necessitate the use of harsh reaction conditions and often result in degradation of the polymer and serious susceptibility thereof to heat, particularly instability thereof to heat. The use of extraneous photosensitizers blended with the polymers is often accompanied by problems of compatibility, uniformity of distribution, volatility, toxicity or exudation and migration of the additive, often resulting in premature and/or erratic crosslinking. It has been suggested in U.S. Patents Nos. 3,214,492, 3,429,852 and 3,574,617 to provide certain acetophenone or benzophenone derivatives having acryloxy or methacryloxy groups so that such compounds can be copolymerized with ethylene or with other vinyl monomers to provide copolymers that

can be cured (i.e. crosslinked) after shaping by exposure to radiation. In general, however, these monomeric compounds are relatively expensive to manufacture.

U.S. Patent No. 2,461,301 discloses allyl o-benzoylbenzoate, homopolymers thereof, and copolymers containing relatively large proportions, such as over 30%, thereof. However, there is no suggestion in the patent of copolymerizing a small amount of allyl benzoylbenzoate, from 0.1 to 10% by weight, with at least one other ethylenically unsaturated monomer to provide copolymers that are curable to a crosslinked condition upon exposure to radiation.

U.S. Patents 3,926,640 and 3,926,641, disclose photopolymerizable compositions comprising the reaction product of (1) a hydroxy-containing ester of an unsaturated acid and a polyol, such as ethylene glycol monomethacrylate or trimethylolpropane diacrylate with (2) a mono- or di-carboxyl benzophenone, such as benzoylbenzoic acid.

Belgian Patent No. 866,657 discloses monoethylenically unsaturated derivatives of vinylbenzyl-substituted benzophenones or acetophenones, and homopolymers and copolymers thereof that can be cured (i.e. crosslinked) by exposure to radiation.

In accordance with the present invention, it has unexpectedly and surprisingly been discovered that copolymers containing small amounts, i.e. about 0.1 to 10% by weight, of allyl o-, m-, or p-benzoylbenzoate or benzoyl ring-substituted derivatives of allyl o-, m-, and p-benzoylbenzoate, preferably allyl o-benzoylbenzoate or benzoyl ring-substituted derivatives thereof, e.g. with a wide variety of conventional ethylenically unsaturated vinyl or vinylidene monomers, can be readily cured (i.e. crosslinked) by exposure to radiation. Such copolymers per se or compositions containing them are particularly useful as adhesives, binders, coatings, caulks, foams, and impregnating compositions.

According to the invention there is provided copolymer containing (1) from 0.1 to 10% by weight of units of at least one monomer of the formula:

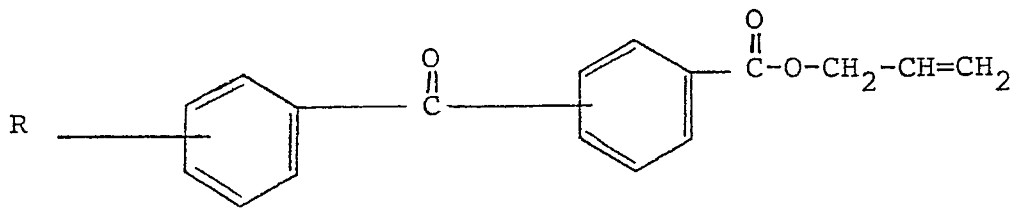
I

wherein R is H, $C_1$-$C_9$ alkyl, $C_1$-$C_9$ alkoxy, isobornyl Cl or Br, and (2) units of at least one different monoethylenically unsaturated monomer.

Hereinafter, the expression "allyl benzoylbenzoate monomers" is used generically and is meant to include the various monomers represented by the formula above. Examples of suitable "R" substituent groups include alkyl groups such as methyl, ethyl, i-propyl, n-propyl, butyl, pentyl, hexyl, 2-ethylhexyl, and isobornyl, and alkoxy groups such as methoxy, ethoxy, butoxy, and the like alkoxy derivatives of the alkyl groups mentioned above. As is set forth above, allyl o-benzoylbenzoate and benzoyl-ring substituted derivatives thereof are preferred. Such compounds may have the formula:

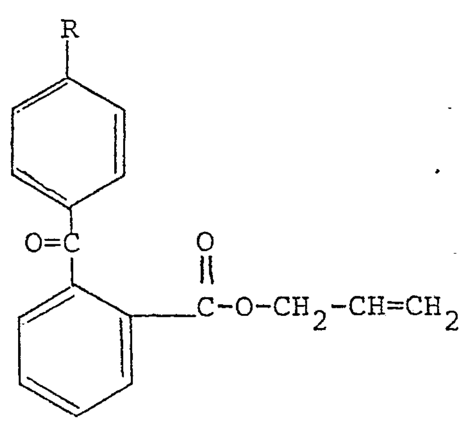
II

wherein R is as defined above. When substituted, the allyl o-(p-substituted benzoyl)benzoate derivatives, wherein the para-substituent is selected from the group consisting

of alkyl and alkoxy, are preferred. More preferably, the allyl o-benzoylbenzoate monomers which are useful in the present invention are those represented by the formula above wherein the group designated "R" is H or $C_1$-$C_4$ alkyl, particularly H or a para-substituent comprising at least one of $-CH_3$, $-C_2H_5$, -n-$C_3H_7$, $-C_3H_7$, $-OCH_3$, and $-OC_2H_5$ groups. Copolymers of allyl benzoylbenzoate monomers represented by the formula above can be prepared by any of the usual vinyl polymerization methods which are well known to those skilled in the art. Thus, such polymers may be prepared by means of free radical initiated processes utilizing bulk, suspension, solution, or emulsion polymerization techniques; or they may be prepared by ionic catalysis or by means of stereospecific catalysts such as those of the type developed by Ziegler. The linear polymers may have molecular weights in the range of 10,000 to 300,000 (viscosity average) when made by solution technique, or from 100,000 to 900,000 or more when made by emulsion technique. Chain transfer agents may be used to provide lower molecular weights.

Preferably the amount of units of the above formulae in the copolymer is from 0.1 to 5% by weight.

The comonomers which may be utilized with allyl benzoylbenzoate monomers for the preparation of the crosslinkable copolymers of this invention can be any ethylenically unsaturated monomer such as, for example, styrene; alpha-methyl styrene; vinyl toluene; the acrylic and methacrylic acid esters of aliphatic alcohols, e.g. $C_1$-$C_{18}$ alkyl esters, such as methyl, ethyl, propyl, butyl, isobutyl, anyl, hexyl, 2-ethyl hexyl, octyl, isobornyl, lauryl and stearyl alcohols, more preferably $C_1$-$C_8$ alkyl esters; acrylic acid; methacrylic acid; itaconic acid; isoprene; acrylamide; methacrylamide, acrylonitrile; methacrylonitrile, butadiene; vinyl propionate; dibutyl fumarate; dibutyl maleate; diallyl phthalate; vinylidene chloride; vinyl chloride; vinyl fluoride; vinyl acetate; ethylene; and propylene etc. Any of these monomers may

be used either alone or in combination with one another together with allyl benzoylbenzoate. Preferably, the comonomer(s) used are monoethylenically unsaturated monomers having a single group of the formula $H_2C=C<$.

Copolymers containing from about 0.1 to 10%, preferably from about 0.1 to 5%, by weight of allyl benzoylbenzoate monomers, can be effectively crosslinked upon exposure to actinic radiation, such as ultraviolet light. The copolymers of allyl benzoylbenzoate which are used in this invention, whether prepared by means of bulk, suspension, solution, or emulsion polymerization techniques or by other means, are all characterized by their sensitivity to ultraviolet light and thus are readily crosslinked by exposure thereto. This improved crosslinking ability may be at least fully equivalent, and usually superior, to the results obtained when extraneous photosensitizers are added to comparable polymers which do not contain allyl benzoylbenzoate. Moreover, many of the deficiencies which are inherent in the use of these extraneous photosensitizers may be avoided with the products of this invention. Thus, these polymeric compositions generally exhibit excellent crosslinking ability without the difficulties posed by such problems as volatility, toxicity, migration and premature crosslinking.

In addition to the preparation of conventional polymers which are prepared by the polymerization of at least one allyl benzoylbenzoate monomer together with one or more vinyl comonomers, it is also possible to prepare graft copolymers wherein at least one allyl benzoylbenzoate monomer is polymerized in the presence of previously prepared vinyl polymers such as polyolefins, polyvinyl halides and polyvinyl esters. The resulting graft copolymers also exhibit excellent crosslinking ability upon being exposed to actinic radiation, such as ultraviolet light

In order to crosslink the copolymers of allyl benzoylbenzoate monomers it is merely necessary to expose them to ultraviolet light, i.e. to radiation having a

wavelength of about $2x10^{-7}$m to $5x10^{-7}$m (about 2,000 to 5,000 Å), for a period of time which is sufficient to accomplish the desired amount of crosslinking and yet which will not result in any undesirable degradation of the copolymer, said degradation being in the form of oxidation and chain cleavage of the copolymer and being manifested by discoloration and a marked deterioration in the physical properties of the copolymer composition. The length of exposure will also be dependent on the source of radiation as well as on the distance between the source and the copolymer sample.

The crosslinking procedure may be conducted while the copolymer is still in the initial physical form resulting from the polymerization procedure. However, it is preferred and more convenient to effect the crosslinking reaction after the polymer has been formed into a shaped article, e.g. a film, coating, or molded article. In either instance, the degree of crosslinking will be determined by the extent to which the copolymer has been insolubilized. Thus, for example, if the copolymer is still in solution, crosslinking will be evidenced by the progressive precipitation or gelation of the dissolved copolymer. On the other hand, if the copolymer has been formed into a shaped article, crosslinking will be noted by the resistance exhibited by the shaped article to solvents in which it would ordinarily dissolve or soften.

The resulting crosslinked compositions can then be used for a wide variety of applications. Thus, they may be used in applications wherein high oil, grease and solvent resistance as well as increased stiffness are required. Specifically, they may be used in photoreproduction processes, in processes wherein it is desirable to engrave or carve intricate shapes and/or designs without the use of cutting tools, and in industrial construction.

The addition copolymers of allyl benzoylbenzoate monomers that are of linear, essentially uncrosslinked

character retain their formability by virtue of their thermoplastic and soluble nature, so that they can readily be shaped into films, sheets, and other articles and then can be exposed to active radiation, such as ultraviolet light of wave length mentioned hereinabove, to crosslink the polymers and thereby render them infusible and insoluble. For example, the uncrosslinked copolymers may be used as film-forming binders, adhesives or topcoats in the production of various coating and/or impregnating compositions, such as pigment-dyeing and printing compositions for application to papers, textiles and films which after application can be rendered resistant to removal by heating or solvents by subjecting the films carried by or in the textiles or papers to actinic radiation. Examples of products to which such topcoats may be applied include vinyl coated fabrics and wall coverings. Examples of films which can be coated by the copolymers of the invention are any one of the variety of well-known plasticized polyvinyl chloride films. The linear addition copolymers can be used as binders for non-woven fabrics or webs. They may be applied uniformly over the entire area of the non-woven web or in any predetermined pattern, e.g. along intersecting sets of parallel lines, either straight or curved in a regular or even somewhat irregular array. Depending on the purpose for which the product is to be used, the fibrous product of non-woven character may contain from about 1-400%, e.g. 2-400%, by weight of copolymer binder based on the dry weight of the untreated web. In uses where the product is intended to retain some fibrous quality, the preferred proportion of binder is from about 10-150% by weight. The impregnated non-woven web may then be subjected to actinic radiation, e.g. UV light, to crosslink the polymer wherever it is present, thereby rendering the treated non-woven web more or less resistant to disintegration by water or solvents. Instead of applying the linear polymer of the present

invention in a pattern to the non-woven web, it may be applied uniformly throughout the area of the web and then the web may be subjected to the actinic radiation, e.g. ultraviolet light, in a predetermined pattern through a light filter or opaque screen so that selected areas of the polymer film coating or impregnant are protected from the actinic radiation whereas other areas are exposed and rendered more or less resistant to solvents and/or water. After the screened exposure, the unexposed portions of the polymer may be removed by washing, as by an aqueous or organic solvent.

The copolymers of allyl benzoylbenzoate monomers may be used to produce "wet wipes", disposable diapers and/or diaper covercloths. The use of a screen or filter can control the extent of crosslinking selectively in various areas of the bonded diaper or diaper covercloth so that, for example, the crotch area can be rendered resistant to disintegration by water-soaking whereas the peripheral areas can be disintegrated within a short time of half a minute to two minutes or so on soaking in water. The crotch area may be of sufficiently small size that it will not interfere with the flushing of the entire diaper and/or diaper covercloth down the toilet after use.

The copolymers of allyl benzoylbenzoate monomers may be used to produce caulk compositions. These compositions possess the highly desirable properties of remaining flexible and extensible while the surface develops a paint-like tack-free film upon exposure to UV radiation.

The copolymers of allyl benzoylbenzoate monomers may be used to produce foam compositions useful, for example, in producing foam-backed films which in turn are useful, for example, in lumber wrap applications. When used in this way, the above described foam compositions possess the advantageous property, upon exposure to UV radiation, of providing a foam backed film characterized by a reduced tendency to "block" (i.e. stick to itself) on being rolled up.

One embodiment of the invention provides a film of the copolymer of the invention either substantially uncrosslinked or at least partially crosslinked. The film may be a coating and/or impregnation, for example a film of essentially uncrosslinked addition polymer comprising from 0.1 to 10% by weight of allyl benzoylbenzoate monomer of formula I wherein the film is carried on or in a substrate adapted to be cured to a crosslinked condition on exposure to ultraviolet radiation. A solvent-resistant protective film of the copolymer may be prepared on a substrate by applying to the substrate a composition comprising a solution or dispersion of essentially uncrosslinked addition polymer of the invention, at least partially drying the composition (or allowing it to at least partially dry) to form a film and, subsequently, and/or concurrently with the drying step, subjecting the film to actinic radiation to at least partially crosslink the polymer.

The invention also embraces methods of preparing certain products in which certain materials are coated and/or impregnated with the copolymer which is cured by exposure to actinic radiation, such as ultraviolet radiation. Preferred materials are non-woven fabrics, paper and textiles. Alternatively the polymers may be formulated to form compositions useful as caulks, sealants, adhesives and other coating compositions.

Accordingly the invention also provides a non-woven fibrous web bonded by the impregnation thereof with linear, essentially uncrosslinked addition copolymer of the invention wherein the copolymer is used in a proportion of from about 1% to 400% by weight based on the dry weight of the untreated web. Also provided is a non-woven fibrous web wherein the copolymer binder is cured to a crosslinked condition by controlled exposure of the impregnated web to ultraviolet light, thereby rendering the bonded web resistant to disintegration in aqueous

media or in organic solvent media to a limited extent. The non-woven fibrous web may be in the form of a diaper covercloth wherein various areas have been subjected to different extents of ultraviolet exposure, a crotch area being thereby more resistant to disintegration on soaking in water than the peripheral areas, thereby providing a diaper disposable by flushing down a toilet.

A method of producing such a disposable diaper cloth comprises impregnating a web of adsorbent fibers with a dispersion of linear, essentially uncrosslinked addition copolymer of the invention, squeezing the impregnated web to provide an add-on, dry, of about 1% to 20% by weight of the copolymer, based on the dry fiber weight of the web, drying the impregnated web and subjecting the web containing the polymer to UV light while using a mask having an opening at the crotch area to provide greater curing of the polymer in that area.

Preferably the method of making a non-woven fabric comprises

a. providing a mass of fibers associated in a random or a regular pattern to form a web or mat;

b. contacting with the fibers, thereby impregnating the fibers with an aqueous dispersion of a binder comprising an emulsion polymer, containing from about 1% to 60% by weight of resin solids, polymerized from a monomer mixture comprising about 0.1% to 10% by weight of an allyl benzoylbenzoate monomer of formula I above;

c. drying the binder-impregnated mass of fibers, to effect fusion of the polymer and bonding of the fibers thereby; and

d. exposing the dried binder-impregnated mass of fibers to ultraviolet radiation for a period of time sufficient to cure the binder.

Another embodiment comprises a cellulosic fiber paper

having improved wet strength impregnated with at least about 1% by weight, based on the dry fiber weight, of a linear, essentially uncrosslinked addition copolymer of the invention, the copolymer being in crosslinked state resulting from exposure of the impregnated paper to ultraviolet light.

Three further embodiments are as follows: A method of producing a pressure sensitive adhesive which comprises blending 1 to 95 parts by weight, based on total amount of blend, of a copolymer of the invention, 0.1 to 5 parts by weight of at least one photoinitiator, 0.1 to 10 parts by weight of one or more polyethylenically unsaturated monomers, 0.1 to 10 parts by weight of other polymers, copolymers or resins, and the balance, to total 100 parts by weight of blend of at least one other monoethylenically unsaturated monomer having a group of the formula $H_2C=C<$; and curing the resulting blend by exposure to ultraviolet radiation.

A method of producing a sealant which comprises blending 10 to 90 parts by weight based on total amount of blend, of a copolymer of the invention, 10-90 parts by weight of inert particulate filler, 1-10 parts by weight of pigment, and 0.1-2 parts by weight of a drier; applying the resulting blend to an exterior surface; and curing the blend to a tack-free, paint-like film by exposure to ambient ultraviolet radiation.

A method of producing a foamed coating which comprises blending 10 to 95 parts by weight, based on total amount of blend, of a copolymer of the invention, 5-90 parts by weight of inert particulate filler, 1-5 parts by weight of a suitable emulsifier, and 1-5 parts by weight of a stabilizer; subjecting the resulting blend to foaming means so as to provide a foam; applying the foam to a substrate adapted to be cured by exposure to ultraviolet radiation; drying the foam; and curing the dried foam by exposure to ultraviolet radiation.

Some preferred embodiments of the invention will now be more particularly described in and by the following examples, in which the parts and percentages are by weight unless otherwise expressly noted.

EXAMPLE 1:

A monomer solution (A) of butyl acrylate (BA), 150 g.; ethyl acrylate (EA), 325 g.; acrylic acid (AA), 15 g.; allyl o-benzoyl benzoate (ABB), 10 g.; and 2-hydroxyethylmercaptan (2-HEM), 0.5 g. is prepared. To a flask equipped with a stirrer, thermometer, addition funnel, nitrogen inlet, and reflux condenser is charged toluene, 70 g. and 30 g. of a monomer solution A. A solution (B) of t-butylperoctoate, 2.5 g. in 25 g. of toluene, is also prepared. The flask charge is heated to 100°C. whereupon 2.5 g. of solution B is added and heating is then continued to reflux (111°C.). The remaining A and B are combined and added to the flask over a 3 hour period beginning 15 minutes after the initial charge of B. As the polymerization proceeds the pot temperature increases and it is limited to 115°C. by an automatic temperature control. Thirty minutes after the monomer feed is complete a chaser catalyst charge of t-butylperoctoate, 1.25 g. in 3.0 g. toluene, is added and the temperature of 115°C. is maintained for 60 additional minutes. The polymer at this point is a viscous fluid having 82.4% solids, conversion calculated 97.6%. The bulk of the toluene is removed by applying vacuum while heating at 100-110°C. This produces a

slightly hazy, pale yellow highly viscous resin. Solids 98.2%, viscosity 2,000,000 cps (#4 at 0.3 rpm and 25°C.).

EXAMPLE 2:

Proceeding as in Example 1 but using 327.5 g. of ethyl acrylate and 7.5 g. of ABB, a similar polymer having 98.6% solids and 2,000,000 cps (#4 at 0.3 rpm and 25°C.) is prepared.

EXAMPLE 3:

Proceeding as in Example 1 but using the monomer mixture 50 2-EHA/45 BA/3 AA/2 ABB, a softer polymer having 98.2% solids and 1,020,000 cps (#4 at 0.3 rpm at 25°C.) is prepared. 2-EHA represents 2-ethylhexyl acrylate and the copolymer contains the monomers in approximately the proportions in which they are present in the monomer mixture.

EXAMPLE 4:

To a flask equipped with a stirrer, thermometer, addition funnels and nitrogen inlet is charged deionized (DI) water 521 g., Triton X-405 (70% active ingredient, t-octylphenoxypoly (39)ethoxyethanol) 25.7 g., 36 g. of a 0.1% aqueous solution of $FeSO_4 \cdot 7H_2O$, 9.9 g. of a 1% aqueous solution of Versene, acetic acid 0.20 g., ethyl acrylate 161.1 g., acrylic acid 13.5g., ABB 5.4 g., and 2-hydroxyethylmercaptan (mercaptoethanol) 0.90 g. This seed charge is sparged with nitrogen for 60 minutes while the following solutions and emulsion are prepared.

| | |
|---|---|
| Solution 1 | sodium formaldehyde sulfoxylate 0.36 g.<br>DI water 22 g. |
| Solution 2 | sodium hydrosulfite 0.95 g.<br>DI water 5 g. |
| Solution 3 | Triton X-405 25.7 g.<br>DI water 34 g. |
| Solution 4 | sodium formaldehyde sulfoxylate 1.44 g.<br>DI water 110 g. |

| | | |
|---|---|---|
| Emulsion | DI water | 306.0 g. |
| | Triton X-405 | 25.7 g. |
| | 2-hydroxyethylmercaptan | 3.6 g. |
| | allyl o-benzoylbenzoate (ABB) | 21.6 g. |
| | ethyl acrylate (EA) | 644.4 g. |
| | acrylic acid | 54.0 g. |
| | diisopropylbenzene hydroperoxide (DIBHP) (55% active) | 5.2 g. |

After 60 minutes of nitrogen sparge the nitrogen stream is removed from the liquid but is continued as a sweep through the system. The polymerization is initiated by adding diisopropylbenzene hydroperoxide (55% active) 1.3 g. followed by Solutions 1 and 2. The exothermic polymerization begins in less than 5 minutes and raises the temperature from about 25°C. to about 60°C. in 20 minutes. Five minutes after peak temperature is reached, Solution 3 is added. Four minutes later the 3-hour feeds of Solution 4 and the monomer emulsion are begun. Cooling, as required to maintain 57-60°C., is supplied during the three-hour feeds. After the last charge the batch is complete and may be cooled and filtered. Properties are: Solids, 44.8%; conversion, 96.4%; wet gum, 0.02%; pH 2.2; viscosity, 40 cps (#3 at 30 rpm); light scatter (0.22% solids) 44%.

EXAMPLE 5:

Proceeding as in Example 4 but using the monomer mixture 79.5 EA/10 VT (vinyl toluene)/7.5 AA/3 ABB, there is produced an emulsion polymer having solids, 45.2%; conversion 97.2%; wet gum, 0.1%, pH 2.2; viscosity, 35 cps (#3 at 30 rpm), light scatter, 57%.

EXAMPLE 6:

A monomer solution (A) of butyl acrylate (BA), 334

g.; ethyl acrylate (EA), 97.5 g.; acrylonitrile (AN), 25 g.; acrylic acid (AA), 3.5 g.; methacryloxyureidoethyleneurea, 5 g; and allyl o-benzoylbenzoate (ABB), 15 g. is prepared. A solution (B) of t-butylperbenzoate 1.3 g. in xylene 8.7 g. is also prepared and added to the monomer solution A. To a flask equipped with a stirrer, thermometer, addition funnel, nitrogen inlet, and reflux condenser, is charged xylene 66.5 g. and 51 g. of the monomer solution A and B. The flask charge is heated to reflux (initially about 125°C.) and held at the temperature for about 15 minutes. The remaining monomer solution A and B is added to the flask over a two hour period while maintaining the temperature at reflux and then the batch is cooled and filtered. This produces a polymer having solids 83.3%, viscosity 160,000 cps (#4 at 3 rpm).

To the cooled polymer is added N-hydroxyethyl-N-methyl linseed oil amide (70% active ingredient in xylene) 14 g., then the pressure is reduced to 500 mm and the flask heated to reflux (pot at 160°C.) to distill off the water side-product of the reaction of the acid units in the polymer with the hydroxyl group of the above-identified amide.

After four hours at reflux the reaction is complete and the polymer is diluted with 50 g. of xylene and cooled to provide a 80.9% solids solution with a viscosity of 120,000 cps (#4 at 3 rpm).

EXAMPLE 7:

A monomer emulsion (A) of DI $H_2O$, 900 g.; sodium lauryl sulfate (28% AI; AI means Active Ingredient), 10.7 g.; itaconic acid, 30 g.; acrylamide, 70 g.; ethyl

acrylate, 1180 g.; butyl acrylate, 510 g; acrylonitrile, 90 g.; and allyl o-benzoylbenzoate (ABB), 60 g. is prepared. To a flask equipped with a stirrer, thermometer, addition funnels, and nitrogen inlet is charged DI $H_2O$, 700 g.; monomer emulsion (A), 450 g.; and 0.10% solution of $FeSO_4 \cdot 7H_2O$ 10 g. The charged flask is sparged with nitrogen while the following solutions are prepared.

| | | |
|---|---|---|
| Solution 1 | ammonium persulfate | 1 g. in 20 g. DI $H_2O$ |
| Solution 2 | sodium hydrosulfite | 1 g. in 20 g. DI $H_2O$ |
| Solution 3 | ammonium persulfate | 2 g. in 120 g. DI $H_2O$ |
| Solution 4 | $NaHSO_3$ | 3 g. in 120 g. DI $H_2O$ |

Solution 3 and sodium lauryl sulfate (28% AI) 60.7 g. are added to remainder of emulsion A after the seed charge is removed.

To the seed-charged flask, sparged with nitrogen and at 20°C., solutions 1 and 2 are added. The exothermic polymerization begins in 5 minutes and the temperature increases to about 60°C. in 10 minutes. At the peak of the exotherm, the mixture of solution 3, the additional sodium lauryl sulfate, and the remainder of emulsion A, followed by solution 4, is fed to the flask over a period of 2 hours while maintaining the temperature at 55-65°C. The batch is cooled and filtered. Properties are: solids, 48.4%; conversion, 96.8%; wet gum 0.03%; pH 3.0; viscosity 380 cps (#2 at 30 rpm); and light scatter (0.22% solids) 40%.

EXAMPLE 8:

The emulsion copolymers of Examples 4 and 5 and an emulsion polymer of 100% EA prepared by a procedure

essentially the same as those used to produce the aqueous polymer dispersions obtained in Examples 4 and 5 are applied to a creped paper weighing 68 $g/m^2$ obtained from the wet-laying of a paper pulp containing a small proportion of long cellulosic fibers in addition to the wood pulp fibers of conventional paper-making length. Herein, the EA homopolymer is a control and is designated Polymer A, the copolymer of Example 4 is designated Polymer B and the copolymer of Example 5 is designated Polymer C.

The three polymer dispersions are diluted to 3% solids concentration. Separate sheets of the paper are placed between glass fiber screens to support the paper as it is passed through a respective one of the 3% solids polymer dispersions and then through the squeeze rolls of a textile-padder adjusted to provide a dry add-on (after drying the treated paper at 60°C. for 15 minutes) of 4 to 6%. Half of each treated paper after drying at 60°C. for 15 minutes is passed twice (one pass for each side) on a conveyor belt through an ultraviolet curing range consisting of two 80 W/cm mercury vapor lamps in a housing through which the paper is conveyed at a speed of 4.5 m/sec.

Strips of treated paper are soaked in water for 30 minutes and tensile tested in the cross machine direction using the cut-strip method described in ASTM D1117-69 (7.6 cm gage length, 30.5 cm/min). Results are tabulated below. Although UV exposure increased strength in the absence of photomonomer (Copolymer A) due to degradative crosslinking of EA, significantly higher cured strengths and higher ratios of cured to uncured strengths are attained with photomonomer present (Copolymers B and C).

Wet Tensile Strengths of Bonded Papers

| Binder Copolymer | Breaking Force, g/cm Uncured | UV Cured | Ratio |
|---|---|---|---|
| A | 63 | 131 | 2.1 |
| B | 30.4 | 379 | 12.5 |
| C | 30.4 | 645 | 21.2 |

EXAMPLE 9:

This example illustrates the selective, differential curing of a copolymer of the present invention to provide various degrees of crosslinking in selected areas of a fibrous web such as may be applied in the making of flushable non-woven diaper covercloth where it is desired to provide high wet strength in the crotch area and relatively lower wet strength in the peripheral. On disposal in a toilet the bulk of such a diaper cover disintegrates, and the crotch area is small enough to pass through the sanitary plumbing system without clogging it.

A flushable diaper covercloth is made with an air-laid web weighing 60 $g/m^2$ and composed of 25% 1.5 denier, 4 cm rayon fiber and 75% wood fiber. The wood fiber is of the type used in the absorbent padding under the covercloth in conventional disposable diapers. The web is placed between glass fiber screens, passed through a bath containing 5% of the solids of the emulsion polymer obtained in Examples 4 and 5 and then through the squeeze rolls of a textile padder. The web thus treated is removed from the screens and dried in an oven for 3 minutes at 115°C. The resulting composition of the covercloth is 85% fiber and 15% polymer binder. The bonded web is cut to diaper size, 31 cm by 43 cm, and placed under a cardboard mask. In the center of the mask there is a hole measuring 15 cm by 23 cm with the longer dimension oriented in the longer direction of the covercloth. The mask and covercloth are passed through an ultraviolet curing range to irradiate the center portion

of the diaper cover. The cover is then turned over to similarly irradiate the other side.

The UV curing range consists of two 80W/cm mercury vapor lamps and a conveyor belt in a suitable housing. The nonwoven diaper covercloth is run under the lamps at a speed of 4.5 m/sec.

The tensile strength of the cured portion of the web is 400 g/cm of width measured in a soaking wet condition. The uncured portion is moistened to a 60% water content and found to have a tensile strength of 43 g/cm of width.

An entire diaper covercloth treated as above is gently agitated in a bucket full of cold water. The uncured portion of the cloth disintegrates in 1 to 2 minutes leaving the small cured portion intact.

EXAMPLE 10:

The solution polymer from Example 3 is formulated as described in the following table. A film of the formulation is applied to 1 mil Mylar (DuPont polyester film). The following table also shows the Pressure Sensitive Tape Council method test results for the radiation cured formulation.

| Ingredient | Formulation |
|---|---|
| Polymer of Example 3 | 50 |
| isobornyl acrylate | 45 |
| Witco Castomer U0100 diacrylate resin | 5 |
| diethoxyacetophenone | 2 |
| Est. glass transition temperature | |
| Acrylate resin | -80°C. |
| cured formulation | -26°C. |

Pressure Sensitive Tape Properties

| Type Test | PSTC Test # | |
|---|---|---|
| 180° peel strength (oz/in) | 1 | 24 |
| Dead load shear strength (hr.) | 7 | 0.1 |
| Rolling ball tack (in.) | 6 | 5.5 |
| Qualitative tack | - | Very Good |

EXAMPLE 11:

The polymer of Example 6 is formulated as follows:

$CaCO_3$, 587.3 g.; Thixatral ST (thickening agent, Baker Chemical Co.), 51.6 g.; $TiO_2$, 25.5 g.; polymer of Example 6, 614.8 g.; xylene, 22.2 g.; cobalt naphthenate (6% AI), 0.65 g.; zinc naphthenate (8% AI), 3.2 g.; Silane A-174 (coupling agent, Union Carbide), 1.4 g.; and methyl ethyl ketone oxime, 0.5 g. The materials are blended under nitrogen in a sigma blade mixer and packed out into standard caulk tubes. From the tubes, 0.25 inch thick slabs are prepared and placed out-of-doors in direct sunlight. The results are tabulated below. Mechanical properties of the caulks are unaffected by the surface cure of the caulk bed upon 12 months exterior exposure.

Relative Surface Tack of Photoreactive

Caulk Composition of Example 11

| Exterior Exposure (hrs) | Control[1] | Example 6 |
|---|---|---|
| 6 hrs | Poor- | Fair |
| 24 hrs | Fair- | Good |
| 48 hrs | Fair+ | Good+ |
| 96 hrs | Fair+ | Excellent |

[1]Example 11 without photoactive monomer (i.e. additional EA was substituted for ABB)

EXAMPLE 12:

The emulsion polymer dispersion of Example 7 is compounded in the following formulation:

| Component | Parts by Weight |
|---|---|
| Polymer Dispersion | 414 |
| Hydrated Alumina | 310 |
| Aerotex[R]MW (Melamine-Formaldehyde resin, American Cyanamid) | 9.4 |
| Ammonium Nitrate (20% in $H_2O$) | 10 |
| Ammonium Stearate (33.3% in $H_2O$) | 22.8 |
| Ammonia (28% in $H_2O$) | 6 |

A foam is made by whipping air into the formulation using a Kitchen-Aid Mixer (Model C) to a wet specific gravity of about 0.2. The foam is then cast at a wet thickness of about 35 mils onto 3 mil thick Korad A 63500 acrylic

film and dried in a hot air oven for about 2 minutes at 190°F. (88°C.) The foam-coated film is passed between nip rollers to crush the dried foam layer, thereby imparting an advantageous degree of flexibility to the laminate. The resulting crushed foam coated film is then exposed to ultraviolet radiation to photocure the foamed polymer. (See U.S. Patent 3,804,700 for additional details relating to the preparation of crushed polymer foam containing laminates).

It is to be understood that the foam may be laminated to a variety of substrates including woven and nonwoven fabrics, plastic films, rigid plastics, leather and leather substitutes, paper, wood (including plywood), metals, and the like.

Effect of UV Radiation Cure of Photoactive Foam Binders

| Foam Polymer Binder | UV Exposure[4] Line Speed (ft/min) | | Blocking[1] 180° Peel (lb./min) | Peel Strength[2] From Wood (lb./in) |
|---|---|---|---|---|
| Control[3] | No | -- | 3.5 | 4.6-5 |
| Example 7 | No | -- | 3.6 | 5.6 |
| Example 7 | Yes | 100 | 0.7 | 5.2 |
| Example 7 | No | -- | 3.5 | 5.0 |
| Example 7 | Yes | 50 | 0.7 | 4.6 |
| Example 7 | Yes | 75 | 0.9 | 5.4 |

1 After 2 hours at 150°F. and 100 psi.

2 90° peel strength of samples mounted on No. 2 Idaho Pine with Durolok 150 adhesive.

3 The polymer of Example 7 except the ABB is omitted and replaced with a corresponding amount of EA.

4 Curing range consists of two 80 W/cm mercury vapor lamps and a conveyor belt in a suitable housing.

EXAMPLE 13:

A monomer emulsion, in 840 g of deionized water containing dissolved therein 15.4 g of sodium lauryl sulfate (28% active ingredient in water), of 100 g of allyl benzoylbenzoate (ABB), 80 g of acrylic acid, 640 g

of styrene, and 510 g. of butyl acrylate is prepared.

To a 5 liter kettle is charged 1,235 g of deionized water and 2.5 g of sodium lauryl sulfate (28% active ingredient in water) and this flask charge is heated to 82°C. To this flask is then added a 100 g portion of the monomer emulsion described above and an initiator solution of 4 g of ammonium persulfate in 25 g of water to provide a seed charge and the resulting seed charge is heated with stirring for about 10 minutes.

A solution of 4 g of ammonium persulfate in 120 g of water is added to the remainder of the monomer emulsion.

To the seed charged flask, maintained at about 82-86°C, is then gradually added over a 2 hour period the solution of the remainder of the monomer emulsion and added ammonium persulfate. After this addition is completed, the resulting mixture is maintained at about 82-86°C for about 15 minutes and then cooled to 55°C. The resulting batch is then cooled to room temperature and filtered through cheesecloth. The properties of the resulting polymer dispersion are: Solids, 45.8%; Conversion, 98.7%; pH, 2.6; Viscosity, 100 cps. (Brookfield Viscometer, Spindle #2 at 60 rpm).

EXAMPLE 14:

Proceeding as in Example 13 but using a monomer emulsion, in 840 g of deionized water containing dissolved therein 15.4 g of sodium lauryl sulfate, 100 g of allyl benzoylbenzoate, 80 g of acrylic acid, 450 g of

styrene, 200 g. of vinyl toluene and 1170 g. of butyl acrylate, there is produced a similar polymer dispersion having the following properties: Solids, 45.5%; Conversion, 98.0%; pH, 2.0; Viscosity, 90 cps., No. 1 at 60 rpm.

EXAMPLE 15:

Proceeding as in Example 13 but using a monomer emulsion, in 840 g. of deionized water containing 15.4 g. of sodium lauryl sulfate, of 100 g. of allyl benzoylbenzoate, 80 g. of acrylic acid, 980 g. of styrene, and 840 g. of 2-ethylhexyl acrylate, there is produced a similar polymer dispersion having the following properties: Solids, 46.0%; Conversion, 99.0%; pH 2.2; Viscosity, 30 cps., No. 1 at 60 rpm.

EXAMPLE 16:

This example illustrates the preparation of a polymer from the following monomer mixture: butyl acrylate (BA)/styrene (St)/acrylonitrile (AN)/allyl methyl benzoylbenzoate (AMBB) = 30/45/20/5.

A monomer emulsion, in water, is prepared using the following: 750 g. of deionized (DI) $H_2O$; 53.6 g. of sodium lauryl sulfate (SLS) (28% active ingredient in water), 675 g. of styrene (St), 388.6 g. of butyl acrylate (BA), 300 g. of acrylonitrile (AN) and 136.4 g. of allyl methyl benzoylbenzoate (AMBB) (55% active ingredient in butyl acrylate).

To a flask equipped with a stirrer, thermometer, addition funnel, and a nitrogen inlet is charged 940 g. of DI $H_2O$. The flask is sparged with $N_2$ and heated to about $60^oC$. The flask is then charged with 100 g. of the monomer emulsion described above followed by 37.5 ml of a 0.15% solution of $FeSO_4.7H_2O$ solution, 75 ml of a 0.15% Versene solution, 2.5 g. of t-butyl hydroperoxide (70% active ingredient) and 0.75 g. of sodium formaldehyde sulfoxylate in 50 g. of DI $H_2O$. After about 10 minutes there is added the remainder of the monomer emulsion

which contains an additional 3.75 g of t-butyl hydroperoxide (70% active ingredient), and 3.0 g of sodium formaldehyde sulfoxylate in 200 g of DI $H_2O$. The gradual addition of the remainder of the monomer emulsion is completed over a period of about 2 hours while maintaining the temperature of the flask and contents at about 55-60°C. Then, the batch is cooled to 40°C and filtered through cheesecloth. Properties of the product are: solids, 40%; conversion 98.9%; pH 8.6; viscosity, 12.5 cps. (Brookfield viscometer, #1 spindle at 60 rpm).

EXAMPLE 17

To a flask equipped with a stirrer, thermometer, addition funnels, and nitrogen inlet is charged deionized water 520 g, Triton X-405 (70% active ingredient, t-octylphenoxypoly(39)ethoxyethanol) 25.7 g, $FeSO_4.7H_2O$ (0.1% of aqueous solution) 36 g, Versene (1% aqueous solution) 9.9. This seed charge is sparged with nitrogen for 60 minutes while the following solutions and emulsions are prepared.

| | | |
|---|---|---|
| Monomer Emulsion | DI-water | 305 |
| | Triton X-405 | 25.7 |
| | 55% Styrene | 495 |
| | 20% acrylonitrile | 180 |
| | 22% butyl acrylate | 198 |
| | 3% alkyl-o-benzoylbenzoate (APB) | 27 |
| | diisopropylbenzenehydroperoxide (55%) | 6.5g |
| Solution 1 | sodium hydrosulfite | 0.10g |
| | DI-$H_2O$ | 50 g |
| Solution 2 | sodium formaldehyde sulfoxylate | 0.36g |
| | DI water | 25.0 g |

| | | |
|---|---|---|
| Solution 3 | Triton X-405 | 25.7 |
| | DI water | 34.0 |
| Solution 4 | sodium formaldehyde sulfoxylate | 1.44g |
| | DI water | 110 g |

The nitrogen sparge is removed from the liquid but is continued as a sweep through the system and 246 g of monomer emulsion is charged to the flask. The flask charge is polymerized by adding at about 1 minute intervals Solution 1 and then Solution 2. The exothermic polymerization begins in less than 5 minutes and raises the temperature from about 25°C to about 55°C in 20 minutes. Five minutes after peak temperature is reached, Solution 3 is added. Four minutes later the 3 hour feed of Solution 4 and the monomer emulsion are begun. Cooling, as required to maintain 57-60°C is supplied during the three hour feeds. After the last charges the batch is complete and may be cooled and filtered. Properties are: Solids, 45.6%; conversion, 97.6% wet gum, 1.2%; pH 6.5; viscosity, 50 cps (#2 at 30 rpm).

EXAMPLE 18

Proceeding as in Example 17 but eliminating allyl-o-benzoylbenzoate and increasing butyl acrylate from 198 g to 225 g there is produced a similar polymer dispersion having the following properties: Solids 44.2%; conversion, 94.4%; wet gum, 0.3%; pH, 3.0; light scatter (.22% solids), 36%; viscosity 35 cps (#2 at 30 rpm).

EXAMPLE 19

The following solutions and emulsions are prepared:

Monomer Emulsion (ME)

| | | |
|---|---|---|
| | DI-water | 440 g |
| | sodium lauryl sulfate (20% AI) | 35.7 g |
| | styrene | 500 g |
| | acrylonitrile | 200 g |
| | butyl acrylate | 235 g |
| | allyl 2-(4-methylbenzoyl)-benzoate (50% in BA) | 60 g |
| | itaconic acid | 5 g |

Kettle Charge:

| | | |
|---|---|---|
| | DI-water | 500 g |
| | $FeSO_4.7H_2O$ (0.1% aq. solu) | 24 g |
| | Versene (1% aq solu) | 6.6 g |
| | monomer emulsion | 70 g |
| Solution 1 | t-butylhydroperoxide (70%) | 1.67g |
| Solution 2 | t-butylhydroperoxide (70%) | 2.50g |
| Solution 3 | sodium formaldehyde sulfoxylate (SFS) | 2.5 |
| | DI $H_2O$ | 165 |

The flask charge is made to a flask equipped with a stirrer, thermometer, addition funnels, and nitrogen inlet. Solution 2 is added to the remaining ME after seed charge is made. This seed charge is sparged with nitrogen for 60 minutes, while heating to 60°C. At 60°C, Solution 1 and 23 g of Solution 3 are charged at 1 minute intervals. The exothermic polymerization begins in less than 5 minutes and raises the temperature about 5°C. Feeds of the remaining monomer emulsion and Solution 3 are begun 10 minutes later and are completed in 2 hours. Cooling, as required to maintain 57-60°C, is supplied during the three hour feeds. The batch is cooled and filtered. Properties are: Solids; 45.0%, conversion, 97.8%; nitrogen, 0.03%; pH, 3.2; viscosity, 110 cps. (#2 at 30 rpm).

EXAMPLE 20:

Proceeding as in Example 19, but substituting allyl 2-(4-chlorobenzoyl)benzoate for AMBB, there is produced a similar polymer dispersion having the following properties: solids, 45.0%; conversion, 97.8%, wet gum, 0.1%; pH 4.0; viscosity 120 cps. (#2 at 30 rpm).

EXAMPLE 21

The polymers of Examples 17-20 are provided as emulsions containing 40% solids and are then formulated for application to a stock plasticized vinyl substitute as follows:

| Ingredient | Parts |
|---|---|
| Polymer (40% solids) | 69 |
| Leveler (20%) | 10 |
| Water | 11 |
| Wetting Agent | 2 |
| Rheology Modifier | 2 |
| Coalescent | 6 |

The respective formulations are applied to the stock plasticized vinyl substrate using a RDS Coating Rod, the coated vinyl is dried for 1 min. at about 210°F, and the samples are then passed under a 200 watt/in medium pressure mercury lamp analysis at 15 feet/min to effect UV cure of the polymer.

The properties of the coated vinyl samples are set forth in the following table:

Properties of UV Cured Topcoats for Vinyl Substrates

| Test | Aging | Polymer of Example 18* | | | Polymer of Example 17 | | | Polymer of Example 19 | | | Polymer of Example 20 | | |
|---|---|---|---|---|---|---|---|---|---|---|---|---|---|
| I. Anti-Blocking (Fabric face to face under 0.5 psi load for 30 min at 80°C) (3.45 $kNm^{-2}$) | 1st week | 5 | | | 5 | | | 5 | | | 5 | | |
| | 2d week | 5 | | | 5 | | | 5 | | | 5 | | |
| | 3d week | 5 | | | 5 | | | 5 | | | 5 | | |
| | 4th week | 5 | | | - | | | - | | | - | | |
| II. Newark Flexing (36,000 cycles; 2 hrs) | 1st week | 2 1/2-3 | | | 2 1/2-3 | | | 3 | | | 3 | | |
| | 2d week | 3 1/2 | | | 2 1/2 | | | 3 | | | 3-3 1/2 | | |
| | 3d week | 3 1/2 | | | 3-3 1/2 | | | 3 | | | 3 | | |
| | 4th week | 3 | | | - | | | - | | | - | | |
| | | Cycles 100 | 200 | 300 | Cycles 100 | 200 | 300 | Cycles 100 | 200 | 300 | Cycles 100 | 200 | 300 |
| III. Tabor Abrasion (Under 1 kg of load with CS-17 wheels, weight loss in mg) | 1st week | 8.0 | 14.7 | 21.3 | 9.5 | 28.0 | 30.2 | 12.0 | 17.7 | 24.8 | 8.4 | 16.9 | 22.2 |
| | 2d week | 8.5 | 16.8 | 23.1 | 8.2 | 17.2 | 25.9 | 12.1 | 21.8 | 28.0 | 7.8 | 15.8 | 22.0 |
| | 3d week | 9.5 | 19.9 | 24.5 | 8.3 | 18.6 | 29.8 | 10.7 | 18.1 | 26.5 | 7.0 | 14.3 | 20.3 |
| | 4th week | 7.9 | 19.8 | 26.7 | - | - | - | - | - | - | - | - | - |
| IV. Isopropanol Crack Resistance (substrate melted with 0.5 ml of 70% isopropanol and 50 cycles under 1 kg load) | 1st week | 5 | | | 5 | | | 5 | | | 5 | | |
| | 2d week | 3 1/2-4 | | | 5 | | | 4 1/2-5 | | | 5 | | |
| | 3d week | 4-4 1/2 | | | 5 | | | 4 1/2-5 | | | 5 | | |
| | 4th week | 5 | | | - | | | - | | | - | | |

* Cured at 5 passes at 15 ft/min.

EXAMPLE 22

This example illustrates polymers which are suitable for use as pigment printing binders and which can be prepared, for example, by the process of Examples 1 or 4 above, or any suitable modification thereof. Representative of such suitable polymers are the following:

a. EA/BA/AN/Methylolacrylamide/Acrylamide/AMBB = 76/5/10/2.3/1.7/5;

b. EA/BA/AN/AMBB = 80/5/10/5;

c. EA/BA/Methylolacrylamide/Acrylamide/AMBB/AA = 85/5/2.3/1.7/5/1; and

d. EA/BA/AMBB/AA = 89/5/5/1.

These polymers are formulated with pigment dispersion(s) and thickener clear concentrates in a conventional manner for use as pigment printing compositions for textiles.

CLAIMS:

1. a copolymer comprising (1) from 0.1 to 10% by weight of units of at least one monomer of the formula:

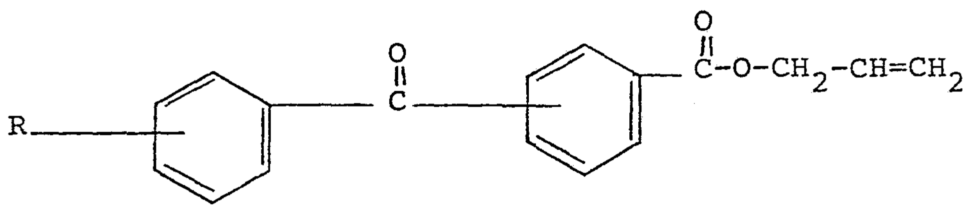

wherein R is H, $C_1$-$C_9$ alkyl, $C_1$-$C_9$ alkoxy, isobornyl, Cl or Br,

and (2) units of at least one different monoethylenically unsaturated monomer.

2. A copolymer as claimed in claim 1 wherein (1) comprises at least one monomer of the formula:

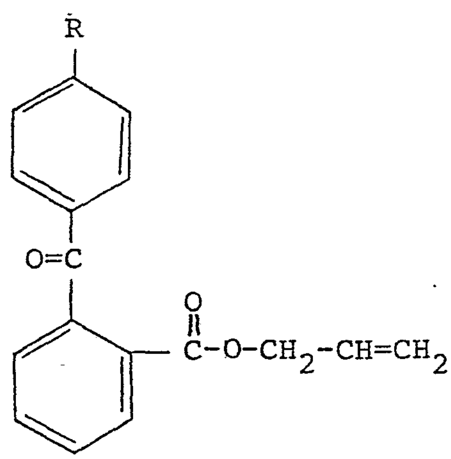

wherein R is as defined in claim 1.

3. A copolymer as claimed in claim 1 or 2 wherein R is H or $C_1$-$C_4$ alkyl.

4. A copolymer as claimed in any of claims 1 to 3 which comprises from 0.1 to 5% by weight of units of monomer (1).

5. A copolymer as claimed in any of claims 1 to 4 wherein monomer (2) comprises one or more of: styrene; alpha-methyl styrene; vinyl toluene; at least one ester of acrylic and/or methacrylic acid with at least one aliphatic alcohol; acrylic acid; methacrylic acid; itaconic acid; isoprene; acrylamide; methacrylamide; acrylonitrile; methacrylonitrile; butadiene; vinyl propionate; dibutyl fumarate; dibutyl maleate; diallyl phthalate, vinylidene chloride; vinyl chloride; vinyl fluoride; vinyl acetate; ethylene and propylene.

6. A copolymer as claimed in claim 5 wherein monomer (2) comprises one or more of: at least one $C_1-C_8$ alkyl acrylate; acrylic acid; methacrylic acid; acrylonitrile; methacrylonitrile; acrylamide; methacrylamide; styrene and vinyl toluene.

7. A copolymer as claimed in any of claims 1 to 6 which is substantially uncrosslinked.

8. A copolymer as claimed in any of claims 1 to 6 when at least partially crosslinked.

9. A film of copolymer as claimed in any of claims 1 to 8.

10. A film as claimed in claim 9 of a linear, essentially uncrosslinked addition copolymer comprising from 0.1% to 10% by weight of an allyl benzoylbenzoate monomer, represented by the formula:

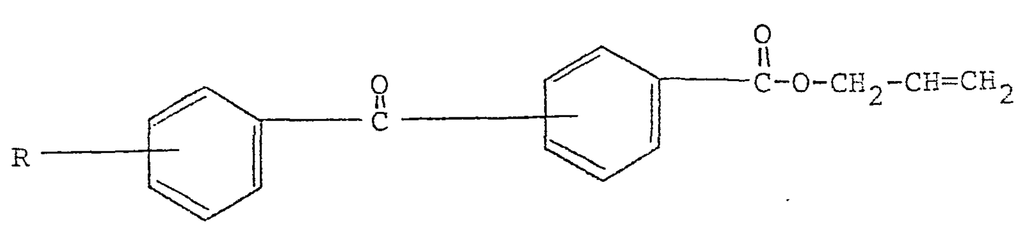

wherein R is a member selected from the group consisting of H, $C_1$-$C_9$ alkyl, $C_1$-$C_9$ alkoxy, Cl, and Br groups, and at least one other monoethylenically unsaturated monomer having a group of the formula $H_2C=C<$, wherein the film is carried on or in a substrate adapted to be cured to a crosslinked condition on exposure to ultraviolet radiation.

11. A crosslinked film carried on or in a substrate and obtained by radiation-curing a film according to claim 9 or 10.

12. A method of producing a polymeric film on a substrate which comprises applying a composition comprising a solution or dispersion of linear, essentially uncrosslinked, addition copolymer of claim 7 to the substrate, at least partially drying the composition or allowing it to at least partially dry, to form a film and subsequently and/or concurrently with the drying, subjecting the film to actinic radiation to at least partially crosslink the polymer in the film.

13. Use of a copolymer as claimed in any of claims 1 to 7 in the preparation of a paper product, non-woven fibrous product, textile product, foam product, caulk, sealant or adhesive.

14. A process for preparing a non-woven fibrous product which comprises treating at least a part of a non-woven web with a copolymer as claimed in any of claims 1 to 7 and at least partially curing the copolymer by exposure to actinic radiation.

15. A process as claimed in claim 14 for the preparation of diaper covercloth which comprises impregnating the non-woven web with the copolymer and curing some of the copolymer by exposing at least one area of web to actinic

radiation to a different extent from at least one other area of the web so that at least one area of the web is more resistant to disintegration in aqueous or organic media than another area of the web.

16. A process as claimed in claim 15 which comprises impregnating the web with from 1 to 20%, by weight of the copolymer, based on the weight of dry fibers, masking the web except the crotch area from actinic radiation and curing the polymer in that area by exposure to the radiation.

17. A process for preparing paper having improved wet-strength which comprises impregnating the paper with at least 1% by weight of dry fiber weight of copolymer as claimed in any of claims 1 to 7, and curing the polymer by exposure to actinic radiation.

18. A process for preparing a pressure sensitive adhesive which comprises blending:

from 1 to 95 parts by weight of copolymer as claimed in any of claims 1 to 7;

from 0.1 to 5 parts by weight of photoinitiator;

from 0.1 to 10 parts by weight of polyethylenically unsaturated monomer;

from 0.1 to 10 parts by weight of other polymer; and

the balance to make 100 parts by weight of monoethylenically unsaturated monomer;

and curing the blend by exposure to actinic radiation.

19. A process for preparing a sealant or caulk which comprises blending:

from 10 to 90 parts by weight of copolymer as claimed in any of claims 1 to 7;

from 10 to 90 parts by weight of inert particulate filler;

from 1 to 10 parts by weight of pigment; and

from 0.1 to 2 parts by weight of a drier,

applying the resultant blend to an exterior surface and curing the blend by exposure to ambient actinic radiation.

20. A process of producing a foamed coating which comprises blending:

from 10 to 95 parts by weight of copolymer as claimed in any of claims 1 to 7;

from 5 to 90 parts by weight of inert particulate filler;

from 1 to 5 parts by weight of emulsifier; and

from 1 to 5 parts by weight of stabilizer,

foaming the blend, applying the foam to a substrate, drying the foam, or allowing it to dry and concurrently with and/or subsequent to the drying step curing the foam by exposing it to actinic radiation.

21. A process as claimed in any of claims 14 to 20 wherein the actinic radiation is ultraviolet radiation.

22. A non-woven fibrous product, paper or textile product impregnated and/or coated with copolymer as claimed in any of claims 1 to 8.

23. An adhesive, caulk or sealant comprising copolymer as claimed in any of claims 1 to 8.

0017364

European Patent Office

# EUROPEAN SEARCH REPORT

Application number
EP 80300786.3

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | DE - A - 2 411 169 (NATIONAL STARCH AND CHEMICAL CORPORATION)<br>+ Claims; page 11, lines 14-20; page 12, lines 9-30 +<br>-- | 1-7,9-19,21-23 | C 08 F 218/12<br>C 09 J 3/14<br>C 09 J 7/02<br>C 09 K 3/10<br>C 09 D 3/81<br>D 06 M 15/40<br>D 06 M 17/00<br>D 04 H 1/64 |
| D | US - A - 3 429 852 (SKOULTCHI)<br>+ Claims 3-12; column 6, lines 40 to 74; column 5, lines 41-66 +<br>-- | 1-8 | |
| | GB - A - 1 538 211 (UCB) (17-01-1979)<br>+ Claims; page 10, lines 10-34; page 11, lines 97-99; example 7 +<br>-- | 1-8,18 19,21, 23 | TECHNICAL FIELDS SEARCHED (Int.Cl. 3)<br>C 08 F 218/00<br>C 09 J<br>C 09 K<br>C 09 D<br>D 06 M<br>D 04 H |
| | FR - A - 2 385 783 (UNION CARBIDE)<br>+ Claims; page 7, lines 16-28 +<br>-- | 1-7,18, 23 | |
| | US - A - 4 082 891 (CURRY)<br>+ Totality +<br>---- | 1,7,9-12 | |
| | | | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| X | The present search report has been drawn up for all claims | | &: member of the same patent family, corresponding document |

| Place of search | Date of completion of the search | Examiner |
|---|---|---|
| VIENNA | 11-06-1980 | WEIGERSTORFER |

EPO Form 1503.1 06.78